(19) **Europäisches Patentamt** **European Patent Office** **Office européen des brevets**

(11) **EP 3 388 828 B1**

(12) **EUROPEAN PATENT SPECIFICATION**

(45) Date of publication and mention of the grant of the patent:
**25.03.2020 Bulletin 2020/13**

(51) Int Cl.:
*G01N 29/24* (2006.01)    *G01N 29/27* (2006.01)
*G01N 29/22* (2006.01)    *G01N 29/06* (2006.01)
*G01N 29/265* (2006.01)    *G01N 29/28* (2006.01)
*G01N 29/07* (2006.01)    *G01N 29/11* (2006.01)
*G01N 29/275* (2006.01)

(21) Application number: **15910309.2**

(22) Date of filing: **22.12.2015**

(86) International application number:
**PCT/KR2015/014093**

(87) International publication number:
**WO 2017/099284 (15.06.2017 Gazette 2017/24)**

(54) **STEEL PLATE INTERNAL FLAW DETECTING DEVICE AND METHOD USING HEIGHT-ADJUSTABLE ULTRASONIC SENSOR**

INTERNE FEHLERERKENNUNGSVORRICHTUNG FÜR STAHLPLATTE UND VERFAHREN MIT HÖHENVERSTELLBAREM ULTRASCHALLSENSOR

DISPOSITIF ET PROCÉDÉ DE DÉTECTION DE DÉFAUTS INTERNES DE PLAQUE D'ACIER UTILISANT UN CAPTEUR ULTRASONORE À HAUTEUR RÉGLABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.12.2015 KR 20150173392**

(43) Date of publication of application:
**17.10.2018 Bulletin 2018/42**

(73) Proprietor: **POSCO**
**Gyeongsangbuk-do 37859 (KR)**

(72) Inventors:
• **LIM, Choong-Soo**
**Gwangyang-si**
**Jeollanam-do 57807 (KR)**
• **HUH, Hyeong-Jun**
**Gwangyang-si**
**Jeollanam-do 57807 (KR)**
• **PARK, Hyun-Chul**
**Gwangyang-si**
**Jeollanam-do 57807 (KR)**
• **LEE, Sang-Jin**
**Gwangyang-si**
**Jeollanam-do 57807 (KR)**

(74) Representative: **Potter Clarkson**
**The Belgrave Centre**
**Talbot Street**
**Nottingham NG1 5GG (GB)**

(56) References cited:
**EP-A1- 0 489 161**       **WO-A1-2015/099229**
**WO-A2-2011/028021**    **CN-A- 104 502 451**
**JP-A- 2001 289 827**      **JP-A- 2005 315 583**
**JP-A- 2006 292 697**      **KR-A- 20150 073 566**

## Description

[Technical Field]

The present disclosure relates to the detection of internal flaws in steel plates using an ultrasonic sensor.

[Background Art]

In thick steel plate manufacturing plants of steel mills, an ultrasonic detection process is performed on a pre-shipment product correction line so as to detect internal flaws in steel plate products. Ultrasonic detection is a method of detecting flaws (defects) such as cracks, inclusions, or segregation of steel plates by transmitting ultrasonic waves to the steel plates, receiving ultrasonic waves reflected from the steel plates, and analyzing the received ultrasonic waves.

Whether an ultrasonic sensor (probe) is brought into contact with a surface of a steel plate, ultrasonic detection methods may be classified as a contact type or a non-contact type.

In the case of a contact-type detection method, detection errors are frequent because of noise relating to the surface state and shape of steel plates, and because of friction between an ultrasonic sensor and a steel plate, the detection surface of a probe wears, thereby decreasing the performance of detection and the lifespan of probes.

To address these problems relating to contact-type detection methods, non-contact-type detection methods have been considered in various aspects.

Non-contact-type detection methods require a contact medium to transmit the energy of ultrasonic waves generated by an ultrasonic sensor (probe) to a steel plate, and a typical example thereof is water having high ultrasonic wave transmission efficiency.

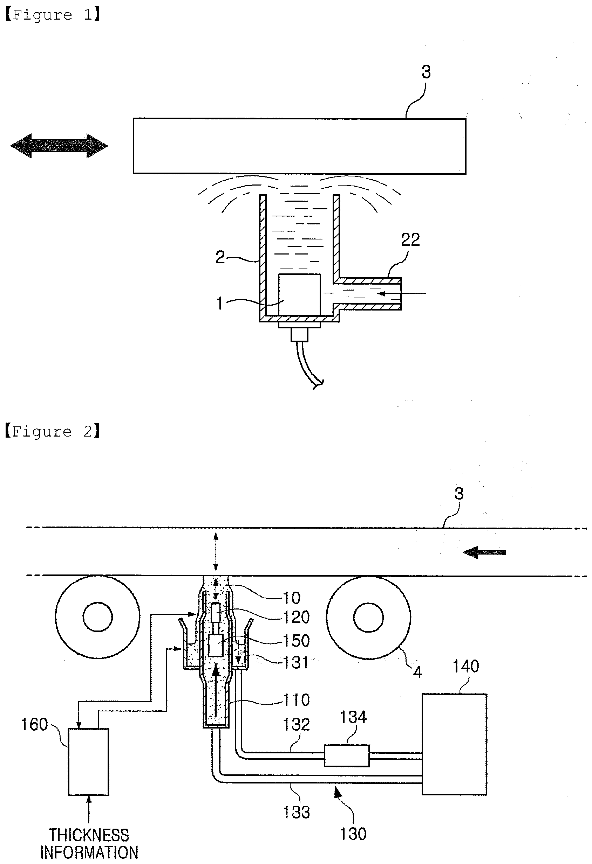

FIG. 1 is a view illustrating an ultrasonic detecting device of the above-described non-contact type.

As illustrated in FIG. 1, the non-contact-type ultrasonic detecting device includes a nozzle case 2 provided at a distance from a lower portion of a detection target object 3 to spray a medium toward the detection target object 3, and an ultrasonic sensor 1 installed in the nozzle case 2 to transmit ultrasonic waves to the detection target object 3 and receive ultrasonic waves.

In the related art, only the ultrasonic sensor 1 and the medium sprayed toward the lower portion of the detection target object 3 are disclosed, but a specific configuration for detecting internal flaws in the detection target object 3 is not disclosed.

Japanese Utility Model Application Laid-open Publication No. S63-200161 (Publication date: December 23, 1988) is a related-art document.

JP-A-2001289827 discloses a robot having an arm for moving a spray nozzle, which contains an ultrasonic sensor.

KR-A-20150073566 discloses a device for detecting internal flaws in a steel plate.

[Disclosure]

[Technical Problem]

Aspects of the present disclosure may provide a device and method for easily detecting internal flaws of steel plates using a height-adjustable ultrasonic sensor.

[Technical Solution]

According to an aspect of the present disclosure, a device for detecting an internal flaw in a steel plate using a height-adjustable ultrasonic sensor may include: a spray nozzle provided at a distance from a lower portion of a steel plate and configured to spray a medium toward the steel plate to form a medium column; an ultrasonic sensor configured to transmit and receive ultrasonic waves for detecting an internal flaw in the steel plate through the medium column; a flaw detecting unit configured to detect the internal flaw in the steel plate based on the transmitted and received ultrasonic waves; and a lifting unit configured to lift or lower the ultrasonic sensor to adjust the distance between the ultrasonic sensor and the steel plate such that waves reflected by a lower surface of the steel plate, waves reflected by the internal flaw of the steel plate, and waves reflected by an upper surface of the steel plate may arrive at the ultrasonic sensor sequentially, wherein the lifting unit is provided in the spray nozzle. According to another aspect of the present disclosure, a method for detecting an internal flaw in a steel plate using a height-adjustable ultrasonic sensor may include: forming a medium column by spraying a medium toward a steel plate using a spray nozzle provided at a distance from a lower portion of the steel plate; transmitting and receiving ultrasonic waves for detecting an internal flaw in the steel plate through the medium column by using an ultrasonic sensor; and detecting the internal flaw in the steel plate based on the transmitted and received ultrasonic waves by using a flaw detecting unit, wherein the ultrasonic sensor may be lifted or lowered to adjust the distance between the ultrasonic sensor and the steel plate such that waves reflected by a lower surface of the steel plate, waves reflected by the internal flaw of the steel plate, and waves reflected by an upper surface of the steel plate may arrive at the ultrasonic sensor sequentially, and wherein the ultrasonic sensor is lifted or lowered using a lifting unit provided in the spray nozzle.

[Advantageous Effects]

According to one or more embodiments of the present disclosure, the distance between an ultrasonic sensor and a steel plate may be adjusted according to the thickness of the steel sheet, such that waves reflected by a lower surface of the steel plate, waves reflected by an internal flaw of the steel plate, and waves reflected by an upper surface of the steel plate may arrive at the ultrasonic sensor sequentially. Thus, the internal flaw in the steel plate may be easily detected.

[Description of Drawings]

FIG. 1 is a view illustrating a flaw detecting device of the related art.
FIG. 2 is a view illustrating a device for detecting internal flaws in steel plates using a height-adjustable ultrasonic sensor according to an embodiment of the present disclosure.
FIGS. 3a and 3b are views illustrating a method for forming a medium column using a spray nozzle shown in FIG. 1.
FIGS. 4a to 4d are waveform diagrams illustrating ultrasonic detecting procedures according to an embodiment of the present disclosure.
FIG. 5 is a perspective view illustrating an ultrasonic detecting device according to another embodiment of the present disclosure.
FIG. 6 is a plan view illustrating the ultrasonic detecting device of FIG. 5.
FIG. 7 is a flowchart illustrating a method for detecting internal flaws in steel plates using a height-adjustable ultrasonic sensor according to an embodiment of the present disclosure.

[Best Mode]

Hereinafter, embodiments of the present disclosure will be described with reference to the accompanying drawings. However, the embodiments of the present disclosure may be modified in various forms, and the scope of the present disclosure is not limited to the embodiments. In the drawings, the shapes and dimensions of elements may be exaggerated for clarity, and the same reference numerals will be used throughout to designate the same or like elements.

FIG. 2 is a view illustrating a device for detecting internal flaws in steel plates using a height-adjustable ultrasonic sensor according to an embodiment of the present disclosure.

Referring to FIG. 2, the ultrasonic detecting device of the embodiment of the present disclosure may include a spray nozzle 110, an ultrasonic sensor 120, a medium circulating unit 130, a lifting unit 150, and a flaw detecting unit 160.

The spray nozzle 110 may be provided below a steel plate 3, which is being transferred, for example, using rolls 4, and may form a medium column 10 (such as a water column) by spraying a medium (such as water) toward the steel plate 3. The medium column 10 may have a height of several tens of millimeters (mm) from a nozzle hole of the spray nozzle 110 to enable stable transmission and reception of ultrasonic waves.

The ultrasonic sensor 120 is provided inside the spray nozzle 110, and configured to transmit and receive ultrasonic waves for detecting internal flaws in the steel plate 3 through the medium column 10. The ultrasonic sensor 120 may be supported and moved upwardly and downwardly by the lifting unit 150 placed under the ultrasonic sensor 120 and may include an immersion type probe configured to be immersed in the medium. The ultrasonic sensor 120 is wired or wirelessly connected to the flaw detecting unit 160 configured to process and calculate ultrasonic wave signals received from the steel plate 3 for analyzing whether the steel plate 3 has an internal flaw. In the case of a wireless connection, the ultrasonic sensor 120 includes a wireless communication module therein to wirelessly transmit ultrasonic wave signals to the flaw detecting unit 160.

The medium circulating unit 130 collects the medium falling from the medium column 10 and circulates the collected medium to the spray nozzle 110.

According to the embodiment of the present disclosure, the medium circulating unit 130 includes a medium receiver 131, a collection tube 132, and a supply tube 133.

The medium receiver 131 is provided around the spray nozzle 110 to receive the medium falling from the medium column 10.

The medium receiver 131 may have a cylinder or box shape confining the spray nozzle 110.

The collection tube 132 is connected to the medium receiver 131 and configured to collect the medium from the medium receiver 131. The medium falling from the medium column 10 to the medium receiver 131 is supplied to the collection tube 132.

A filter 134 may be installed in the collection tube 132 to filter the medium discharged from the medium receiver 131, and thus the medium may be supplied back to the spray nozzle 110 after impurities are removed from the medium.

The supply tube 133 is provided to supply the medium from the collection tube 132 to the spray nozzle 110, and to this end, the supply tube 133 communicates with both the spray nozzle 110 and the collection tube 132.

A spray pressure supply unit 140 may be provided between the supply tube 133 and the collection tube 132 to supply spray pressure to the spray nozzle 110. Since the spray pressure supply unit 140 supplies pressure to the spray nozzle 110, the spray nozzle 110 may spray the medium at constant pressure for forming the medium column 10. A circulation pump may be used as the spray pressure supply unit 140, and the spray pressure of the spray nozzle 110 may be controlled by controlling the circulation pump.

The lifting unit 150 is configured to support the ultrasonic sensor 120 and lift or lower the ultrasonic sensor 120 under the control of the flaw detecting unit 160 such that the distance between the steel plate 3 and the ultrasonic sensor 120 may be adjusted. For example, a hydraulic cylinder may be used as the lifting unit 150. However, any other device such as a rack-pinion gear unit may be used to lift and lower the ultrasonic sensor 120.

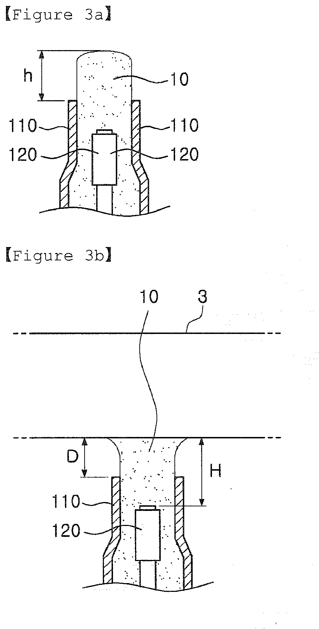

The flaw detecting unit 160 operates the ultrasonic sensor 120 to transmit and receive ultrasonic waves and thus to detect flaws in the steel plate 3. In addition, the flaw detecting unit 160 may receive information regarding the thickness of the steel plate 3 and may control the lifting unit 150 to lift or lower the ultrasonic sensor 120 according to the information regarding the thickness of the steel plate 3, thereby adjusting the distance between the steel plate 3 and the ultrasonic sensor 120. This will be described below with reference to FIGS. 3a to 3d.

In addition, FIGS. 3a and 3b are views illustrating a method for forming a medium column using the spray nozzle shown in FIG. 2.

FIG. 3a is a view illustrating the shape of the medium column 10 formed by the spray nozzle 110, and FIG. 3b is a view illustrating a state in which the medium column 10 formed by the spray nozzle 110 is in contact with the steel plate 3.

As shown in FIG. 3b, a distance D between the nozzle hole of the spray nozzle 110 and a lower surface of the steel plate 3 may be smaller than a height h of the medium column 10. As described above, the medium column 10 is formed such that the height h of the medium column 10 may be greater than the distance D between the nozzle hole of the spray nozzle 110 and the lower surface of the steel plate 3, thereby bringing the medium column 10 into tight contact with the steel plate 3 and stably transmitting and receiving ultrasonic waves through the medium column 10. In addition, reference numeral H is a distance between the ultrasonic sensor 120 and the steel plate 3.

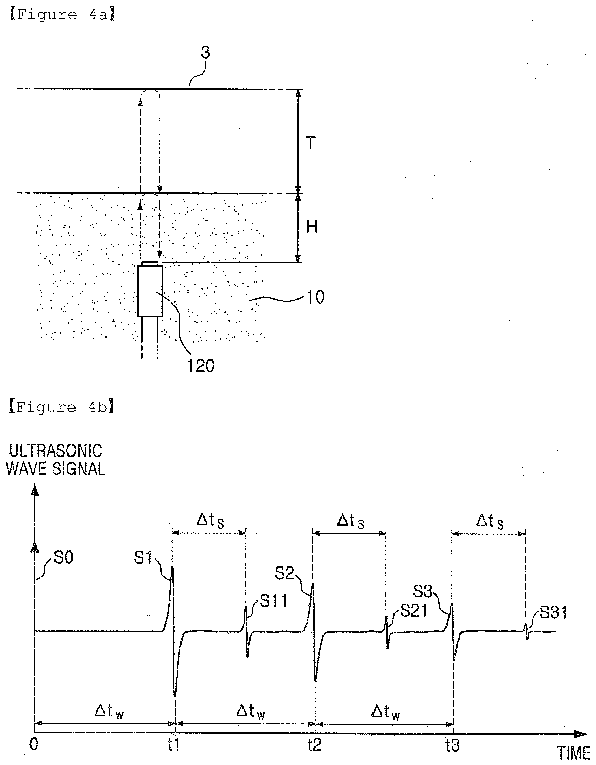

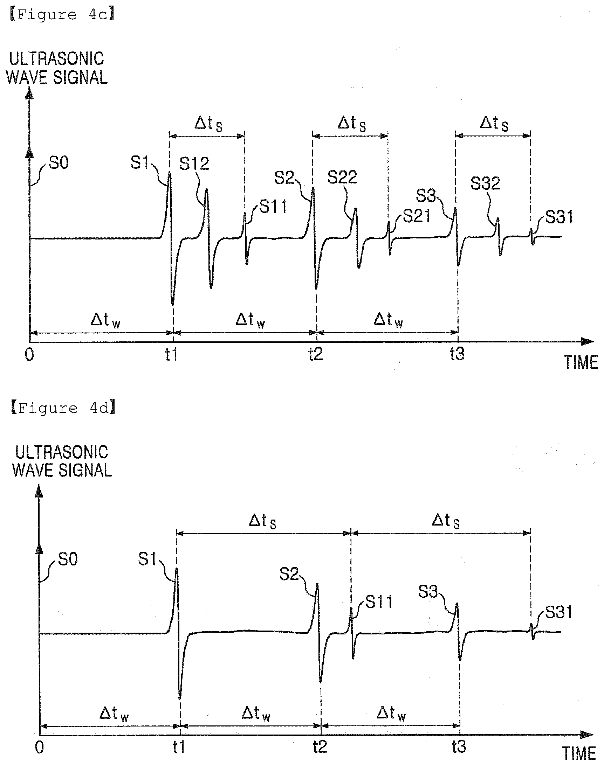

In addition, FIGS. 4a to 4d are waveform diagrams illustrating ultrasonic detecting procedures according to an embodiment of the present disclosure. FIG. 4a is a view illustrating ultrasonic wave signals generated by the ultrasonic sensor 120 and reflected from the lower and upper surfaces of the steel plate 3, FIG. 4b is a view illustrating ultrasonic wave signals when the steel plate 3 has no flaw, FIG. 4c is a view illustrating ultrasonic wave signals when the steel plate 3 has a flaw, and FIG. 4d is a view illustrating ultrasonic wave signals when the distance H between the ultrasonic sensor 3 and the steel plate 3 is too small compared to the thickness T of the steel plate 3.

First, as illustrated in FIG. 4a, an ultrasonic wave signal generated by the ultrasonic sensor 120 is reflected from the lower surface of the steel plate 3 back to the ultrasonic sensor 120, or passes through the inside of the steel plate 3 and is then reflected from the upper surface of the steel plate 3 back to the ultrasonic sensor 120. In this case, the ultrasonic wave signal reflected from the lower surface of the steel plate 3 back to the ultrasonic sensor 120 may be rereflected at a surface of the ultrasonic sensor 3 toward the steel plate 3. As described above, waves reflected multiple times by the lower surface of the steel plate 3 and the surface of the ultrasonic sensor 120 are between the ultrasonic sensor 120 and the steel plate 3.

In the embodiment of the present disclosure, the ultrasonic wave signal reflected from the upper surface of the steel plate 3 and rereflected by the ultrasonic sensor 120 is relatively weak and thus negligible, and thus, the ultrasonic wave signal is not used for detecting internal flaws in the steel plate 3 (that is, negligible).

In addition, FIG. 4b illustrates ultrasonic wave signals when the steel plate 3 has no internal flaw.

Referring to FIGS. 4a and 4b, S0 is an ultrasonic wave signal initially generated by the ultrasonic sensor 120, S1 is an ultrasonic wave signal appearing as the ultrasonic wave signal S0 is reflected by the lower surface of the steel plate 3 and then rereflected at the surface of the ultrasonic sensor 120, S2 is an ultrasonic wave signal appearing as the ultrasonic wave signal S1 is reflected by the lower surface of the steel plate 3 and then rereflected at the surface of the ultrasonic sensor 120, and S3 is an ultrasonic wave signal appearing as the ultrasonic wave signal S2 is reflected by the lower surface of the steel plate 3 and then rereflected at the surface of the ultrasonic sensor 120.

In addition, S11 is an ultrasonic wave signal appearing as the ultrasonic wave signal S0 is reflected from the upper surface of the steel plate 3 back to the ultrasonic sensor 120, S21 is an ultrasonic wave signal appearing as the ultrasonic wave signal S1 is reflected from the upper surface of the steel plate 3 back to the ultrasonic sensor 120, and S31 is an ultrasonic wave signal appearing as the ultrasonic wave signal S3 is reflected from the upper surface of the steel plate 3 back to the ultrasonic sensor 120.

In addition, as expressed by Condition 1 below, $\Delta t_s$ is a period of time taken for an ultrasonic wave signal, having passed through the lower surface of the steel plate 3, to be reflected from the upper surface of the steel plate 3 back to the lower surface of the steel plate 3, and as expressed by Condition 2 below, $\Delta t_w$ is a period of time taken for an ultrasonic wave signal, to be reflected from the lower surface of the steel plate 3 back to the ultrasonic sensor 120.

$$[\text{Condition 1}]$$

$$\Delta t_s = 2H \times Vs$$

where H is the distance from the surface of the ultrasonic sensor to the steel plate, and Vs is the velocity of ultrasonic waves in the steel plate.

[Condition 2]

$$\Delta t_w = 2T \times V_w$$

where T is the thickness of the steel plate, and Vw is the velocity of ultrasonic waves in the medium (water).

In addition, FIG. 4c illustrates ultrasonic wave signals when the steel plate has an internal flaw. Unlike the case of FIG. 4b, ultrasonic wave signals S12, S22, and S32 are added because of the internal flaw of the steel plate 3. The ultrasonic wave signal S12 appears as the ultrasonic wave signal S0 is reflected by the internal flaw of the steel plate 3 back to the ultrasonic sensor 120, the ultrasonic wave signal S22 appears as the ultrasonic wave signal S1 is reflected by the internal flaw of the steel plate 3 back to the ultrasonic sensor 120, and the ultrasonic wave signal S32 appears as the ultrasonic wave signal S2 is reflected by the internal flaw of the steel plate 3 back to the ultrasonic sensor 120.

As illustrated in FIGS. 4a to 4c, when the steel plate 3 has an internal flaw, the distance H between the steel plate 3 and the ultrasonic sensor 120 may be adjusted to satisfy Condition 3 below such that waves S1, S2, and S2 reflected by the lower surface of the steel plate 3, waves S12, S22, and S32 reflected by the internal flaw of the steel plate 3, and waves S11, S21, and S31 reflected by the upper surface of the steel plate 3 may sequentially arrive.

[Condition 3]

$$\Delta t_w < \Delta t_s$$

The distance H between the steel plate S and the ultrasonic sensor 3 satisfying Condition 3 may be expressed by Condition 4 below by substituting Conditions 1 and 2 into Condition 3 and rearranging Condition 3.

[Condition 4]

$$0 < H < \frac{T \times V_S}{V_W}$$

where H is the distance between the ultrasonic sensor and the steel plate, T is the thickness of the steel plate, Vs is the velocity of ultrasonic waves in the steel plate, and Vw is the velocity of ultrasonic waves in the medium (water).

That is, the flaw detecting unit 160 may control the lifting unit 150 to lift or lower the ultrasonic sensor 120 so as to adjust the distance between the ultrasonic sensor 120 and the steel plate 3 according to Condition 4 above. In this manner, the waves S1, S2, and S2 reflected by the lower surface of the steel plate 3, the waves S12, S22, and S32 reflected by the internal flaw of the steel plate 3, and the waves S11, S21, and S31 reflected by the upper surface of the steel plate 3 may sequentially arrive. In this case, the magnitudes of the ultrasonic wave signals are as follows: S1>S12>S11, S2>S22>S21, and S3>S32>S31, and thus when the magnitude of the waves S12, S22, and S32 reflected by the internal flaw of the steel plate 3 is between the magnitude of the waves S1, S2, and S2 reflected by the lower surface of the steel plate 3 and the magnitude of the waves S11, S21, and S31 reflected by the upper surface of the steel plate 3, the flaw detecting unit may determine that the steel plate 3 has an internal flaw.

However, if the distance H between the ultrasonic sensor 120 and the steel plate 3 is too small as compared to the thickness of the steel plate, it is difficult to detect internal flaws.

FIG. 4d is a view illustrating ultrasonic wave signals when the distance H between the ultrasonic sensor 120 and the steel plate 3 is too small compared to the thickness of the steel plate.

That is, as illustrated in FIG. 4d, if the thickness T of the steel plate 3 is too large compared to the distance 200 between the ultrasonic sensor 120 and the steel plate 3, the wave S11 first reflected by the upper surface of the steel plate 3 arrive at the ultrasonic sensor 120 after a plurality of waves, that is, the waves S1 and S2 reflected by the lower surface of the steel plate 3, arrive at the ultrasonic sensor 120 that initially generated the ultrasonic wave signal S0. In this case, during one period (for example, $\Delta t_w + \Delta t_s$ in FIG. 4c), it is difficult to determine whether the steel plate has an internal flaw, and since the magnitude of a wave (not shown) reflected by an internal flaw in the steel plate 3 may be similar to the magnitude of another ultrasonic wave signal (for example, the signals S12 and S2 in FIG. 4c are similar in magnitude), it may not be easy to distinguish the signals.

Therefore, according to the embodiment of the present disclosure, the distance between the ultrasonic sensor 120 and the steel plate 3 is adjusted such that the waves S1, S2, and S2 reflected by the lower surface of the steel plate 3, the waves S12, S22, and S32 reflected by the internal flaw of the steel plate 3, and the waves S11, S21, and S31 reflected by the upper surface of the steel plate 3 may sequentially arrive, and flaws are detected based on the magnitudes of the ultrasonic wave signals. Thus, the internal flaw of the steel plate 3 may be easily detected.

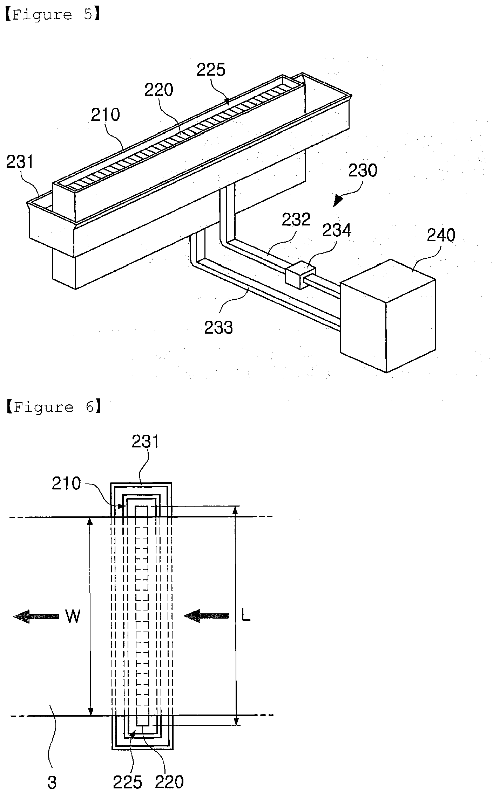

In addition, FIG. 5 is a perspective view illustrating an ultrasonic detecting device according to another embodiment of the present disclosure, and FIG. 6 is a plan view illustrating the ultrasonic detecting device of FIG. 5.

Like in the previous embodiment, the ultrasonic detecting device of the embodiment may include a spray nozzle 210, ultrasonic sensors 220, a medium circulating unit 230, and a spray pressure supply unit 240.

In FIGS. 5 and 6, elements corresponding to elements of the previous embodiment are denoted with reference numbers similar to the reference numbers used in the previous embodiment. That is, reference numbers in the 100s in the previous embodiment are replaced with reference numbers in the 200s in the current embodiment.

According to the embodiment of the present disclosure, the ultrasonic sensors 220 are arranged in a width direction of a steel plate 3, thereby forming a probe array 225. The probe array 225 may have a length L equal to or greater than a width W of the steel plate 3. The spray nozzle 210 accommodates the probe array 225, and in the embodiment of the present disclosure, the spray nozzle 210 is illustrated as having a tetragonal cross-sectional shape with a length in the width direction of the steel plate 3. In addition, it is illustrated that a medium receiver 231 also has a tetragonal box shape confining the outside of the spray nozzle 210. In the embodiment of the present disclosure, however, the spray nozzle 210 and the medium receiver 231 are not limited to the above-described shapes. That is, the spray nozzle 210 and the medium receiver 231 may have other various shapes.

According to the embodiment of the present disclosure, since a plurality of probes 220 arranged in the width direction of the steel plate 3 cover the entire width of the steel plate 3, a detecting process may be performed on the entire width of the steel plate 3 while the steel plate 3 is transferred.

As described above, according to the embodiment of the present disclosure, the distance between the ultrasonic sensors 220 and the steel plate 3 may be adjusted according to the thickness of the steel sheet such that waves reflected by a lower surface of the steel plate 3, waves reflected by an internal flaw of the steel plate 3, and waves reflected by an upper surface of the steel plate 3 may sequentially arrive. Thus, internal flaws of the steel plate 3 may be easily detected.

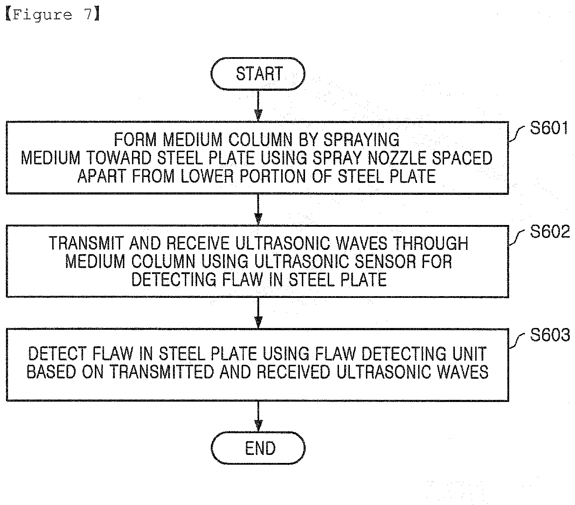

In addition, FIG. 7 is a flowchart illustrating a method for detecting internal flaws in steel plates using a height-adjustable ultrasonic sensor according to an embodiment of the present disclosure. For conciseness of the description of the embodiment, the same descriptions as those given above with reference to FIGS. 1 to 6 will not be repeated here.

Hereinafter, with reference to FIGS. 1 to 7, the method for detecting internal flaws in steel plates using a height-adjustable ultrasonic sensor will be described according to the embodiment of the present disclosure.

Referring to FIGS. 1 to 7, the spray nozzle 110 may spray a medium (such as water) toward a steel plate 3 at a distance H from a lower portion of the steel plate 3, so as to form a medium column 10 (such as a water column) (S601). The medium column 10 may have a height of several tens of millimeters (mm) from the nozzle hole of the spray nozzle 110 to enable stable transmission and reception of ultrasonic waves.

Next, the ultrasonic sensor 120 may transmit and receive ultrasonic waves through the medium column 10 so as to detect an internal flaw in the steel plate 3 (S602). The ultrasonic sensor 120 may be supported and moved upwardly and downwardly by the lifting unit 150 placed under the ultrasonic sensor 120 and may include an immersion type probe configured to be immersed in the medium.

Next, the flaw detecting unit 160 may detect an internal flaw in the steel plate 3 based on the transmitted and received ultrasonic waves (S603).

Specifically, the flaw detecting unit 160 may easily detect an internal flaw in the steel plate 3 based on the magnitudes of sequentially arriving ultrasonic wave signals.

In this case, according to the embodiment of the present disclosure, the flaw detecting unit 160 is configured to control the lifting unit 150 according to information regarding the thickness of the steel plate 3 to lift or lower the ultrasonic sensor 120 and thus to adjust the distance between the steel plate 3 and the ultrasonic sensor 120. Owing to this configuration, waves S1, S2, and S2 reflected by a lower surface of the steel plate 3, waves S12, S22, and S32 reflected by an internal flaw of the steel plate 3, and waves S11, S21, and S31 reflected by an upper surface of the steel plate 3 may arrive sequentially, and flaws may be detected based on the magnitudes of the ultrasonic wave signals arriving sequentially. Thus, the internal flaw of the steel plate 3 may be easily detected.

In the description of the present disclosure, a component denoted with a term such as "~ unit" or "~ er/or" may be implemented as a hardware component, a software component, and/or a combination of hardware and software components. For example, such a component may be implemented with at least one general-purpose or special-purpose computer such as a processor, a controller, an arithmetic logic unit (ALU), a digital signal processor, a microcomputer, a field programmable array (FPA), a programmable logic unit (PLU), a microprocessor, or any other device capable of performing an instruction and responding to the instruction.

In addition, software may include a computer program, a code, an instruction, or a combination of at least one thereof. In addition, processing devices may be configured to operate in a desired manner and may be independently or collectively instructed. Software and/or data may be permanently or temporarily embodied in a certain machine, a component, a physical device, virtual equipment, a computer storage medium or device, or propagating signal waves so as to be interpreted by a processing device or provide instructions or data to the processing device. Software may be distributed over network coupled computer systems and may be stored and executed in a distributed fashion. Software and data may be stored in at least one computer-readable recording medium.

As described above, according to the one or more of the above embodiments of the present disclosure, the distance between the ultrasonic sensor and a steel plate may be adjusted according to the thickness of the steel sheet such that waves reflected by a lower surface of the steel plate, waves reflected by an internal flaw of the steel plate, and waves reflected by an upper surface of the steel plate may sequentially arrive. Thus, internal flaws in the steel plate may be easily detected.

The scope of the present disclosure is not limited to the above-described embodiments and the accompanying drawings. It will be apparent to those skilled in the art that various replacements, modifications, and variations could be made without departing from the scope of the present invention as defined by the appended claims.

[Industrial Applicability]

The above-described embodiments of the present disclosure may be useful to detect internal flaws of steel plates after a final production process in steel mills.

**Claims**

1. A device for detecting an internal flaw in a steel plate (3) using a height-adjustable ultrasonic sensor (120), the device comprising:

    a spray nozzle (110) provided at a distance from a lower portion of a steel plate and configured to spray a medium toward the steel plate to form a medium column;
    an ultrasonic sensor configured to transmit and receive ultrasonic waves for detecting an internal flaw in the steel plate through the medium column;
    a flaw detecting unit configured to detect the internal flaw in the steel plate based on the transmitted and received ultrasonic waves; and
    a lifting unit (150) configured to lift or lower the ultrasonic sensor to adjust the distance between the ultrasonic sensor and the steel plate such that waves reflected by a lower surface of the steel plate, waves reflected by the internal flaw of the steel plate, and waves reflected by an upper surface of the steel plate arrive at the ultrasonic sensor sequentially,
    wherein the lifting unit is provided in the spray nozzle.

2. The device of claim 1, wherein ultrasonic waves reflected by the lower surface of the steel plate are rereflected by the ultrasonic sensor back to the steel plate.

3. The device of claim 1, wherein the flaw detecting unit determines that the steel plate has an internal flaw when the waves reflected by the internal flaw of the steel plate arrive at a time between a time at which the waves reflected by the lower surface of the steel plate arrive and a time at which the waves reflected by the upper surface of the steel plate arrive.

4. The device of claim 3, wherein the flaw detecting unit determines that the steel plate has an internal flaw when a magnitude of the waves reflected by the internal flaw of the steel plate is between a magnitude of the waves reflected by the lower surface of the steel plate and a magnitude of the waves reflected by the upper surface of the steel plate.

5. The device of claim 1, wherein the lifting unit adjusts the distance between the ultrasonic sensor and the steel plate to satisfy the following condition:

$$0 < \frac{T \times V_W}{V_S} < H$$

    where H is the distance between the ultrasonic sensor and the steel plate, T is a thickness of the steel plate, Vs is a velocity of ultrasonic waves in the steel plate, and Vw is a velocity of ultrasonic waves in the medium.

6. The device of claim 1, wherein the medium comprises water.

7. The device of claim 1, wherein a plurality of ultrasonic sensors are arranged in a width direction of the steel plate, and
the spray nozzle is configured to accommodate an ultrasonic array formed by the plurality of ultrasonic sensors.

8. The device of claim 7, wherein the ultrasonic array has a length equal to or greater than a width of the steel plate.

9. A method for detecting an internal flaw in a steel plate using a height-adjustable ultrasonic sensor, the method comprising:

    forming a medium column by spraying a medium toward a steel plate using a spray nozzle provided at a distance from a lower portion of the steel plate;
    transmitting and receiving ultrasonic waves for detecting an internal flaw in the steel plate through the medium column by using an ultrasonic sensor; and

detecting the internal flaw in the steel plate based on the transmitted and received ultrasonic waves by using a flaw detecting unit,

wherein the ultrasonic sensor is lifted or lowered to adjust the distance between the ultrasonic sensor and the steel plate such that waves reflected by a lower surface of the steel plate, waves reflected by the internal flaw of the steel plate, and waves reflected by an upper surface of the steel plate arrive at the ultrasonic sensor sequentially, and

wherein the ultrasonic sensor is lifted or lowered using a lifting unit provided in the spray nozzle.

10. The method of claim 9, wherein ultrasonic waves reflected by the lower surface of the steel plate are rereflected by the ultrasonic sensor back to the steel plate.

11. The method of claim 9, wherein the detecting of the internal flaw comprises determining that the steel plate has an internal flaw when the waves reflected by the internal flaw of the steel plate arrive at a time between a time at which the waves reflected by the lower surface of the steel plate arrive and a time at which the waves reflected by the upper surface of the steel plate arrive.

12. The method of claim 11, wherein the detecting of the internal flaw comprises determining that the steel plate has an internal flaw when a magnitude of the waves reflected by the internal flaw of the steel plate is between a magnitude of the waves reflected by the lower surface of the steel plate and a magnitude of the waves reflected by the upper surface of the steel plate.

13. The method of claim 9, wherein the distance between the ultrasonic sensor and the steel plate satisfies the following condition:

$$0 < \frac{T \times V_W}{V_S} < H$$

where H is the distance between the ultrasonic sensor and the steel plate, T is a thickness of the steel plate, Vs is a velocity of ultrasonic waves in the steel plate, and Vw is a velocity of ultrasonic waves in the medium.

14. The method of claim 9, wherein the medium comprises water.

**Patentansprüche**

1. Vorrichtung zum Erfassen eines inneren Fehlers in einer Stahlplatte (3) unter Verwendung eines höhenverstellbaren Ultraschallsensors (120), wobei die Vorrichtung Folgendes umfasst:

eine Sprühdüse (110), die in einem Abstand von einem unteren Abschnitt einer Stahlplatte vorgesehen ist und ausgestaltet ist, um ein Medium in Richtung der Stahlplatte zu sprühen, um eine Mediensäule zu bilden;
einen Ultraschallsensor, der ausgestaltet ist, um Ultraschallwellen zum Erfassen eines inneren Fehlers in der Stahlplatte durch die Mediensäule zu senden und zu empfangen;
eine Fehlererfassungseinheit, die ausgestaltet ist, um den inneren Fehler in der Stahlplatte auf der Grundlage der gesendeten und empfangenen Ultraschallwellen zu erfassen; und
eine Hubeinheit (150), die ausgestaltet ist, um den Ultraschallsensor anzuheben oder abzusenken, um den Abstand zwischen dem Ultraschallsensor und der Stahlplatte derart einzustellen, dass Wellen, die von einer Unterseite der Stahlplatte reflektiert werden, Wellen, die von dem inneren Fehler der Stahlplatte reflektiert werden, und Wellen, die von einer Oberseite der Stahlplatte reflektiert werden, nacheinander am Ultraschallsensor ankommen, wobei die Hubeinheit in der Sprühdüse vorgesehen ist.

2. Vorrichtung nach Anspruch 1, wobei Ultraschallwellen, die von der Unterseite der Stahlplatte reflektiert werden, vom Ultraschallsensor zur Stahlplatte zurück reflektiert werden.

3. Vorrichtung nach Anspruch 1, wobei die Fehlererfassungseinheit bestimmt, dass die Stahlplatte einen inneren Fehler aufweist, wenn die von dem inneren Fehler der Stahlplatte reflektierten Wellen zu einer Zeit zwischen einer Zeit ankommen, zu der die von der Unterseite der Stahlplatte reflektierten Wellen ankommen, und einer Zeit, zu der die von der Oberseite der Stahlplatte reflektierten Wellen ankommen.

4. Vorrichtung nach Anspruch 3, wobei die Fehlererfassungseinheit bestimmt, dass die Stahlplatte einen inneren Fehler aufweist, wenn eine Größe der von dem inneren Fehler der Stahlplatte reflektierten Wellen zwischen einer Größe der von der Unterseite des Stahlplatte reflektierten Wellen und einer Größe der von der Oberseite der Stahlplatte reflektierten Wellen liegt.

5. Vorrichtung nach Anspruch 1, wobei die Hubeinheit den Abstand zwischen dem Ultraschallsensor und der Stahlplatte einstellt, um die folgende Bedingung zu erfüllen:

$$0 < \frac{T \times V_w}{V_s} < H$$

wobei H der Abstand zwischen dem Ultraschallsensor und der Stahlplatte ist, T die Dicke der Stahlplatte ist, Vs die Geschwindigkeit der Ultraschallwellen in der Stahlplatte ist und Vw die Geschwindigkeit der Ultraschallwellen im Medium ist.

6. Vorrichtung nach Anspruch 1, wobei das Medium Wasser umfasst.

7. Vorrichtung nach Anspruch 1, wobei mehrere Ultraschallsensoren in einer Breitenrichtung der Stahlplatte angeordnet sind und
die Sprühdüse ausgestaltet ist, um eine Ultraschallanordnung aufzunehmen, die durch die Vielzahl von Ultraschallsensoren gebildet wird.

8. Vorrichtung nach Anspruch 7, wobei die Ultraschallanordnung eine Länge aufweist, die gleich oder größer als eine Breite der Stahlplatte ist.

9. Verfahren zum Erfassen eines inneren Fehlers in einer Stahlplatte unter Verwendung eines höhenverstellbaren Ultraschallsensors, wobei das Verfahren Folgendes umfasst:

Ausbilden einer Mediensäule durch Aufsprühen eines Mediums auf eine Stahlplatte unter Verwendung einer Sprühdüse, die in einem Abstand von einem unteren Abschnitt der Stahlplatte vorgesehen ist;
Senden und Empfangen von Ultraschallwellen zum Erfassen eines inneren Fehlers in der Stahlplatte durch die Mediensäule unter Verwendung eines Ultraschallsensors; und
Erfassen des inneren Fehlers in der Stahlplatte basierend auf den gesendeten und empfangenen Ultraschallwellen unter Verwendung einer Fehlererfassungseinheit,
wobei der Ultraschallsensor angehoben oder abgesenkt wird, um den Abstand zwischen dem Ultraschallsensor und der Stahlplatte so einzustellen, dass Wellen, die von einer Unterseite der Stahlplatte reflektiert werden, Wellen, die von dem inneren Fehler der Stahlplatte reflektiert werden, und Wellen, die von einer Oberseite der Stahlplatte reflektiert werden, nacheinander am Ultraschallsensor ankommen, und
wobei der Ultraschallsensor unter Verwendung einer in der Sprühdüse vorgesehenen Hubeinheit angehoben oder abgesenkt wird.

10. Verfahren nach Anspruch 9, wobei Ultraschallwellen, die von der Unterseite der Stahlplatte reflektiert werden, vom Ultraschallsensor zur Stahlplatte zurück reflektiert werden.

11. Verfahren nach Anspruch 9, wobei das Erfassen des inneren Fehlers das Bestimmen umfasst, dass die Stahlplatte einen inneren Fehler aufweist, wenn die von dem inneren Fehler der Stahlplatte reflektierten Wellen zu einer Zeit zwischen einer Zeit ankommen, zu der die von der Unterseite der Stahlplatte reflektierten Wellen ankommen und einer Zeit, zu der die von der Oberseite der Stahlplatte reflektierten Wellen ankommen.

12. Verfahren nach Anspruch 11, wobei das Erfassen des inneren Fehlers das Bestimmen umfasst, dass die Stahlplatte einen inneren Fehler aufweist, wenn eine Größe der von dem inneren Fehler der Stahlplatte reflektierten Wellen zwischen einer Größe der von der Unterseite der Stahlplatte reflektierten Wellen und einer Größe der von der Oberseite der Stahlplatte reflektierten Wellen liegt.

13. Verfahren nach Anspruch 9, wobei der Abstand zwischen dem Ultraschallsensor und der Stahlplatte die folgende Bedingung erfüllt:

$$0 < \frac{T \times V_w}{V_s} < H$$

wobei H der Abstand zwischen dem Ultraschallsensor und der Stahlplatte ist, T die Dicke der Stahlplatte ist, Vs die Geschwindigkeit der Ultraschallwellen in der Stahlplatte ist und Vw die Geschwindigkeit der Ultraschallwellen im Medium ist.

14. Verfahren nach Anspruch 9, wobei das Medium Wasser umfasst.

**Revendications**

1. Dispositif permettant de détecter un défaut interne dans une plaque d'acier (3) à l'aide d'un capteur ultrasonique réglable en hauteur (120), le dispositif comprenant :

une buse de pulvérisation (110) disposée à distance d'une partie inférieure d'une plaque d'acier et conçue pour pulvériser un agent vers la plaque d'acier pour former une colonne d'agent ;
un capteur ultrasonique configuré pour émettre et recevoir des ondes ultrasoniques permettant de détecter un défaut interne dans la plaque d'acier à travers la colonne d'agent ;

une unité de détection de défauts configurée pour détecter le défaut interne dans la plaque d'acier en fonction des ondes ultrasoniques émises et reçues ; et

une unité de levage (150) conçue pour élever ou abaisser le capteur ultrasonique pour ajuster la distance entre le capteur ultrasonique et la plaque d'acier de telle sorte que des ondes réfléchies par une surface inférieure de la plaque d'acier, des ondes réfléchies par le défaut interne de la plaque d'acier, et des ondes réfléchies par une surface supérieure de la plaque d'acier arrivent au capteur ultrasonique de manière séquentielle,

dans lequel l'unité de levage est disposée dans la buse de pulvérisation.

2. Dispositif selon la revendication 1, dans lequel des ondes ultrasoniques réfléchies par la surface inférieure de la plaque d'acier sont re-réfléchies par le capteur ultrasonique vers la plaque d'acier.

3. Dispositif selon la revendication 1, dans lequel l'unité de détection de défauts détermine que la plaque d'acier présente un défaut interne lorsque les ondes réfléchies par le défaut interne de la plaque d'acier arrivent à un moment entre un moment où les ondes réfléchies par la surface inférieure de la plaque d'acier arrivent et un moment où les ondes réfléchies par la surface supérieure de la plaque d'acier arrivent.

4. Dispositif selon la revendication 3, dans lequel l'unité de détection de défauts détermine que la plaque d'acier présente un défaut interne lorsqu'une amplitude des ondes réfléchies par le défaut interne de la plaque d'acier est comprise entre une amplitude des ondes réfléchies par la surface inférieure de la plaque d'acier et une amplitude des ondes réfléchies par la surface supérieure de la plaque d'acier.

5. Dispositif selon la revendication 1, dans lequel l'unité de levage ajuste la distance entre le capteur à ultrasons et la plaque d'acier pour satisfaire la condition suivante :

$$0 < \frac{T \times V_w}{V_s} < H$$

où H est la distance entre le capteur ultrasonique et la plaque d'acier, T est une épaisseur de la plaque d'acier, $V_s$ est une vitesse d'ondes ultrasoniques dans la plaque d'acier, et $V_w$ est une vitesse d'ondes ultrasoniques dans l'agent.

6. Dispositif selon la revendication 1, dans lequel l'agent comprend de l'eau.

7. Dispositif selon la revendication 1, dans lequel une pluralité de capteurs ultrasoniques sont disposés dans un sens de la largeur de la plaque d'acier, et la buse de pulvérisation est conçue pour accueillir un réseau ultrasonique formé par la pluralité de capteurs ultrasoniques.

8. Dispositif selon la revendication 7, dans lequel le réseau ultrasonique présente une longueur égale ou supérieure à une largeur de la plaque d'acier.

9. Procédé de détection d'un défaut interne dans une plaque d'acier à l'aide d'un capteur ultrasonique réglable en hauteur, le procédé comprenant :

la formation d'une colonne d'agent en pulvérisant un agent vers une plaque d'acier à l'aide d'une buse de pulvérisation disposée à distance d'une partie inférieure de la plaque d'acier ;

l'émission et la réception d'ondes ultrasoniques permettant de détecter un défaut interne dans la plaque d'acier à travers la colonne d'agent à l'aide d'un capteur ultrasonique ; et

la détection du défaut interne dans la plaque d'acier en fonction des ondes ultrasoniques émises et reçues à l'aide d'une unité de détection de défaut,

dans lequel le capteur ultrasonique est élevé ou abaissé pour ajuster la distance entre le capteur ultrasonique et la plaque d'acier de telle sorte que des ondes réfléchies par une surface inférieure de la plaque d'acier, des ondes réfléchies par le défaut interne de la plaque d'acier et des ondes réfléchies par une surface supérieure la de la plaque d'acier arrivent au capteur ultrasonique de manière séquentielle, et

dans lequel le capteur ultrasonique est élevé ou abaissé à l'aide d'une unité de levage disposée dans la buse de pulvérisation.

10. Procédé selon la revendication 9, dans lequel des ondes ultrasoniques réfléchies par la surface inférieure de la plaque d'acier sont re-réfléchies par le capteur ultrasonique vers la plaque d'acier.

11. Procédé selon la revendication 9, dans lequel la détection du défaut interne comprend la détermination du fait que la plaque d'acier présente un défaut interne lorsque les ondes réfléchies par le défaut interne de la plaque d'acier arrivent à un moment entre un moment où les ondes réfléchies par la surface inférieure de la plaque d'acier et un moment où les ondes réfléchies par la surface supérieure de la plaque d'acier arrivent.

**12.** Procédé selon la revendication 11, dans lequel la détection du défaut interne comprend la détermination du fait que la plaque d'acier présente un défaut interne lorsqu'une amplitude des ondes réfléchies par le défaut interne de la plaque d'acier est comprise entre une amplitude des ondes réfléchies par la surface inférieure de la plaque d'acier et une amplitude des ondes réfléchies par la surface supérieure de la plaque d'acier.

**13.** Procédé selon la revendication 9, dans lequel la distance entre le capteur ultrasonique et la plaque d'acier satisfait la condition suivante :

$$0 < \frac{T \times V_w}{V_s} < H$$

où H est la distance entre le capteur ultrasonique et la plaque d'acier, T est une épaisseur de la plaque d'acier, Vs est une vitesse d'ondes ultrasoniques dans la plaque d'acier, et Vw est une vitesse d'ondes ultrasoniques dans l'agent.

**14.** Procédé selon la revendication 9, dans lequel l'agent comprend de l'eau.

【Figure 1】

【Figure 2】

THICKNESS
INFORMATION

【Figure 3a】

【Figure 3b】

【Figure 4a】

【Figure 4b】

[Figure 4c]

ULTRASONIC
WAVE SIGNAL

[Figure 4d]

ULTRASONIC
WAVE SIGNAL

【Figure 5】

【Figure 6】

【Figure 7】

```
                    ┌─────────────┐
                    │    START    │
                    └──────┬──────┘
                           │
                           ▼
    ┌──────────────────────────────────────────────────┐    ┌ S601
    │            FORM MEDIUM COLUMN BY SPRAYING         │
    │ MEDIUM TOWARD STEEL PLATE USING SPRAY NOZZLE SPACED│
    │       APART FROM LOWER PORTION OF STEEL PLATE     │
    └──────────────────────┬───────────────────────────┘
                           │
                           ▼
    ┌──────────────────────────────────────────────────┐    ┌ S602
    │    TRANSMIT AND RECEIVE ULTRASONIC WAVES THROUGH  │
    │      MEDIUM COLUMN USING ULTRASONIC SENSOR FOR    │
    │            DETECTING FLAW IN STEEL PLATE          │
    └──────────────────────┬───────────────────────────┘
                           │
                           ▼
    ┌──────────────────────────────────────────────────┐    ┌ S603
    │  DETECT FLAW IN STEEL PLATE USING FLAW DETECTING UNIT│
    │  BASED ON TRANSMITTED AND RECEIVED ULTRASONIC WAVES│
    └──────────────────────┬───────────────────────────┘
                           │
                           ▼
                    ┌─────────────┐
                    │     END     │
                    └─────────────┘
```

17

**EP 3 388 828 B1**

**REFERENCES CITED IN THE DESCRIPTION**

**Patent documents cited in the description**

- JP S63200161 B
- JP 2001289827 A
- KR 20150073566 A